# EUROPÄISCHE PATENTSCHRIFT

(11) **EP 1 588 806 B1**
(45) Veröffentlichungstag und Bekanntmachung des Hinweises auf die Patenterteilung: **21.11.2007**
(21) Anmeldenummer: 05008607.3
(22) Anmeldetag: 20.04.2005
(51) Int. Cl.: B25J 9/22, B25J 13/02

(54) **Verfahren und handgeführte Vorrichtung zum Beeinflussen eines mehrachsigen Handhabungsgeräts**
Process and hand-operated device for teaching a multiaxial manipulator
Procédé et dispositif manuel pour l'apprentissage d'un manipulateur multiaxial

(30) Priorität: 24.04.2004 DE 102004020099
(43) Veröffentlichungstag der Anmeldung: 26.10.2005
(73) Patentinhaber: KUKA Roboter GmbH, 86165 Augsburg (DE)
(72) Erfinder: Bischoff, Rainer, 86163 Augsburg (DE)
(74) Vertreter: Lempert, Jost

(56) Entgegenhaltungen:
- DE-A1- 3 223 896
- DE-A1- 19 626 459
- PATENT ABSTRACTS OF JAPAN Bd. 1997, Nr. 06, 30. Juni 1997 (1997-06-30) -& JP 09 047989 A (KAWASAKI HEAVY IND LTD), 18. Februar 1997 (1997-02-18)

## Beschreibung

Die Erfindung betrifft ein Verfahren zum Beeinflussen eines mehrachsigen Handhabungsgeräts, wie eines Mehrachs-Industrieroboters, mit einer handgeführten Beeinflussungs-Vorrichtung, deren Position und Lage (Stellung) im Raum gemessen und zum Beeinflussen des Handhabungsgeräts verwendet wird. Weiterhin betrifft die Erfindung eine handgeführte Vorrichtung zum Beeinflussen einer Bewegung eines mehrachsigen Handhabungsgeräts, wie eines Mehrachs-Industrieroboters, dessen Lage und Position (Stellung) im Raum mittels einer enthaltenen Sensorik bestimmbar ist.

Ein solches Verfahren und eine solche Vorrichtung sind zum Beispiel aus der DE-A-3223896 bekannt.

Mehrachsige Handhabungsgeräte, wie Mehrachs-Industrieroboter, im Folgenden kurz als Roboter bezeichnet, werden heutzutage mit Hilfe großer und relativ schwerer, kabelgebundener Handgeräte bedient und programmiert. Um ein Verfahren des Roboters per Hand und damit verbunden das sogenannte Teachen von (Bearbeitungs-)Punkten effizient zu gestalten, muss eine Bedienperson eine Mehrzahl verschiedener Koordinatensysteme, wie Welt-, Basis- und Werkzeug-Koordinaten beherrschen, so dass ohne eine grundlegende Schulung und/oder fundiertes Hintergrundwissen kaum jemand in der Lage ist, einen solchen Roboter zu verfahren und/oder zu programmieren.

Um dieser Problematik Herr zu werden, ist in der Vergangenheit bereits vorgeschlagen worden, Roboter unter Verwendung einer handgeführten Beeinflussungs-Vorrichtung quasi intuitiv zu bedienen und/oder zu programmieren. So ist aus der DE 32 23 896 A1 eine Abtasteinrichtung zum Erstellen von Programmen für bahngesteuerte Industrieroboter bekannt, mit der die zu programmierende Bahn von Hand abgefahren und deren Position und Orientierung (Stellung) durch eine Auswerteeinrichtung in Form elektronischer Daten abgespeichert wird. Die durch die Abtasteinrichtung erfassten Stellungen werden in elektrische Daten umgewandelt und drahtgebunden oder drahtlos zur Auswerteeinrichtung übertragen, in der die bahnbestimmenden Größen ermittelt, in für die Robotersteuerung geeignete Daten umgesetzt und gespeichert werden. In der genannten Abtasteinrichtung kommen zum Erfassen der Stellungen Kreisel, Beschleunigungsmesser, optisch wirksame Mittel oder auf der zu programmierenden Bahn abrollbare Kugeln zum Einsatz. Hierbei ist insbesondere als nachteilig anzusehen, dass die Genauigkeit der Stellungserfassung aufgrund der eingesetzten Erfassungsmittel über einen längeren Zeitraum nur unzureichend ist, so dass sich derartige Vorrichtungen und mit ihrer Hilfe durchführbare Programmierverfahren bislang nicht durchgesetzt haben.

Weiterhin ist aus der DE 38 10 054 A1 ein Verfahren und eine Vorrichtung zur Bewegungsführung von mehrachsigen Manipulatoren bekannt, wobei die Bewegungsführung in die Vorgabe aufeinanderfolgender translatorischer und rotatorischer Bewegungen des Manipulatorwerkzeugs aufgeteilt wird. Dabei kommt eine Führungseinrichtung mit pistolenartigem Gehäuse zum Einsatz, deren Ausrichtung eine Translation mit zeitbegrenzter Geschwindigkeitsvorgabe erzeugt, während rotatorische Bewegungen durch eine Änderung der räumlichen Winkellage der Führungseinrichtung erreicht werden. Hierbei ist es insbesondere als nachteilig anzusehen, dass die beschriebene Aufteilung in Translations- und Rotationsbewegung wenig intuitiv ist, wobei die erwähnte Geschwindigkeitsvorgabe eine weitere Einschränkung bedeutet. Zudem bedingt die eingesetzte Sensorik auch hier eine unzureichende Genauigkeit der Stellungserfassung über längere Zeiträume.

Weiterhin ist aus der DE 100 48 952 A1 bekannt, zur Aufnahme von Koordinaten von Raumpunkten im Zuge einer zeitoptimierten und genauen Bestimmung der räumlichen Situation eines Roboters Referenzmarkierungen mit Hilfe einer mit optischen Sensoren ausgerüsteten Tasteinrichtung zu erfassen und anschließend auf dem Wege einer Bildverarbeitung die Stellung der Tasteinrichtung zu ermitteln. Hierbei ist vor allen Dingen die Verwendung einer in diesem Zusammenhang relativ ungenauen, bildverarbeitenden Sensorik zu bemängeln.

Der Erfindung liegt die Aufgabe zugrunde, ein Verfahren und eine Vorrichtung der eingangs genannten Art zu schaffen, mit dem das Handverfahren und Programmieren von Robotern, insbesondere das Teachen von Punkten und Bahnen in einfacher Weise intuitiv durch eine Bedienperson vornehmbar ist, wobei jedoch besonderer Wert auf die erreichte Genauigkeit der Beeinflussung gelegt wird, insbesondere vor dem Hintergrund einzuhaltender Sicherheitsbestimmungen beim Einsatz derartiger Handhabungsgeräte.

Diese Aufgabe wird bei einem Verfahren der eingangs genannten Art dadurch gelöst, dass im Wechsel Bewegungen der Beeinflussungs-Vorrichtung und zugeordnete Bewegungen des Handhabungsgeräts durchgeführt werden. Bei einer Vorrichtung der eingangs genannten Art ist zur Lösung der Aufgabe vorgesehen, dass diese eine Kontrolleinrichtung zum Überwachen einer Messungenauigkeit der Stellungsbestimmungs-Sensorik aufweist. Auf diese Weise wird erfindungsgemäß eine vorzugebende Gesamtbewegung des Roboters aus mehreren Teilbewegungen zusammengesetzt, wobei jeweils nur so lange Bewegungen der Beeinflussungs-Vorrichtung durchgeführt werden, wie die Genauigkeit der in der erfindungsgemäßen Vorrichtung eingesetzten Sensorik beim Teachen ausreicht. Die aufgeführten Nachteile vorbekannter Verfahren und Vorrichtungen lassen sich auf diese Weise vermeiden, so dass anders als beim Stand der Technik eine sichere Beeinflussbarkeit des Roboters gegeben ist.

In Weiterbildung des erfindungsgemäßen Verfahrens ist zunächst vorgesehen, dass die Stellung der Beeinflussungs-Vorrichtung durch eine innerhalb dieser angeordnete, interne Sensorik gemessen wird, oder dass die Stellung der Beeinflussungs-Vorrichtung durch eine außerhalb dieser angeordnete, externe Sensorik gemessen wird, wobei vorzugsweise eine Messungenauigkeit der zur Stellungsmessung eingesetzten Sensorik kontinuierlich überwacht wird. Somit ist es im Zuge des erfindungsgemäßen Verfahrens möglich, eine Beeinflussung des Roboters auf Zeiträume zu beschränken, in denen sich durch die Beeinflussungs-Vorrichtung Stellungen hinreichend genau bestimmen lassen. Vorzugsweise wird weiterhin eine zeitliche Abfolge des Wechsels zwischen Bewegungen der Beeinflussungs-Vorrichtung und Bewegungen des Handhabungsgeräts durch die Messungenauigkeiten der eingesetzten Sensorik vorgegeben. Mit anderen Worten: Bewegungen der Beeinflussungs-Vorrichtung können den Roboter nur dann beeinflussen, wenn die eingesetzte Sensorik eine hinreichend genaue Erfassung der Stellung der Beeinflussungs-Vorrichtung erlaubt. Wenn dies nicht (mehr) der Fall ist, können erfindungsgemäß die zugeordneten Bewegungen des Handhabungsgeräts erfolgen, bis wiederum eine sichere und genaue Beeinflussbarkeit des Handhabungsgeräts durch die Beeinflussungs-Vorrichtung möglich ist.

In diesem Zusammenhang sieht eine äußerst bevorzugte Weiterbildung des erfindungsgemäßen Verfahrens vor, dass bei Erreichen eines vorgegebenen Werts für die Messungenauigkeit eine erforderliche Kalibrierung der eingesetzten Sensorik angezeigt und optional ein Beeinflussen des Handhabungsgeräts durch die Beeinflussungs-Vorrichtung verhindert wird. Es erfolgt also regelmäßig eine Kalibrierung der Beeinflussungs-Vorrichtung, d.h. der in ihr eingesetzten Sensorik, so dass durch den erfindungsgemäßen Wechsel zwischen Bewegungen der Beeinflussungs-Vorrichtung und Bewegungen des Handhabungsgeräts ein optimal sicheres und genaues Beeinflussen eines Roboters möglich ist. Vorzugsweise erfolgt der Wechsel von einer Bewegung der Beeinflussungs-Vorrichtung zur Bewegung des Handhabungsgeräts nach Betätigen einer Zustimmungseinrichtung. Dies kann vorzugsweise manuell durch eine Bedienperson geschehen.

Zweckmäßigerweise werden im Zuge eines erfindungsgemäßen Verfahrens gleichzeitig Stellungen oder Stellungsänderungen in allen bewegungsrelevanten Freiheitsgraden des Handhabungsgeräts erfasst, so dass intuitiv durch Bewegen der Beeinflussungs-Vorrichtung eine vollständige Beeinflussbarkeit des Roboters gegeben ist.

Wenn ein konkreter Bahnverlauf der Bewegungsbahn des Roboters nicht von zentraler Bedeutung ist, kann vorgesehen sein, dass lediglich eine Anfangs- und eine Endstellung der Beeinflussungs-Vorrichtung erfasst werden. Es ist dann in Weiterbildung des erfindungsgemäßen Verfahrens möglich, dass die zugeordnete Bewegung des Handhabungsgeräts entlang einer vorbestimmten Art von Bahn, z.B. einer geradlinigen, oder zirkularen Bahn, zwischen den der Anfangs- und der Endstellung der Beeinflussungs-Vorrichtung jeweils zugeordneten Stellungen des Handhabungsgeräts erfolgt. Weitere mögliche Bahntypen sind auch splineförmige Bahnen, kollisionsfreie Bahnen (mit Hilfe eines Umweltmodells oder geeigneter, zusätzlicher Sensorik) oder dergleichen und nicht zuletzt Bahnen, die aus der Robotersteuerung bekannten Bahnsegmenten zusammengesetzt werden können (Approximation einer kontinuierlich aufgezeichneten Bahn anhand der verfügbaren Bahnbefehle). Alternativ kann jedoch vorgesehen sein, dass während der Bewegung der Beeinflussungs-Vorrichtung kontinuierlich Stellungen derselben erfasst werden, so dass die zugeordnete Bewegung des Handhabungsgeräts entlang einer nach Maßgabe der erfassten Stellungen bestimmten, im Wesentlichen beliebig gestalteten Bahn erfolgt. Eine Bedienperson kann somit umfassend und in direkter Weise Einfluss auf eine Bewegungsbahn des Roboters nehmen.

In äußerst bevorzugter Weiterbildung des erfindungsgemäßen Verfahrens ist vorgesehen, dass zusätzlich weitere, einer Stellung des Handhabungsgeräts zugeordnete Parameter, wie eine Einwirkkraft auf ein zu bearbeitendes Werkstück, durch die Beeinflussungs-Vorrichtung bestimmt werden. Die gemessenen Stellungen und die weiteren bestimmten Parameter der Beeinflussungs-Vorrichtung, wie ein Bewegungsverlauf einschließlich Geschwindigkeiten und Beschleunigungen, können anschließend zum Erstellen eines Programms zur Bewegungssteuerung des Handhabungsgeräts und/oder zum direkten Bedienen desselben verwendet werden. Auf diese Weise ist erfindungsgemäß auch eine Beeinflussung von Handhabungsgeräten durch Gestenerkennung möglich.

Zusätzliche Weiterbildungen des erfindungsgemäßen Verfahrens beinhalten, dass die Beeinflussungs-Vorrichtung auf das zu beeinflussende Handhabungsgerät kalibriert wird, indem sie mit diesem verbunden wird, das Handhabungsgerät anschließend eine vorbestimmte Abfolge von Raumpunkten anfährt und dann Stellungsmesswerte der Beeinflussungs-Vorrichtung zu bekannten Stellungswerten des Handhabungsgeräts in Beziehung gesetzt werden. Weiterhin kann vorgesehen sein, dass zum gezielten Beeinflussen des Handhabungsgeräts, wie einer Auswahl zu verfahrender Achsen und/oder eines Betriebsmodus, bestimmte mit der Beeinflussungs-Vorrichtung beschriebene Gesten erkannt und entsprechend zum Beeinflussen des Handhabungsgeräts umgesetzt werden.

Um das Handhabungsgerät besonders feinfühlig und genau zu positionieren und zu orientieren, sieht eine äußerst bevorzugte Weiterbildung des Verfahrens vor, dass mittels der Beeinflussungs-Vorrichtung eine Skalierung der Bewegung des Handhabungsgeräts in Raum und/oder Zeit erfolgt. Zudem kann vorgesehen sein, dass eine Beeinflussung des Handhabungsgeräts mittels der Beeinflussungs-Vorrichtung auf eine bestimmte Anzahl von Freiheitsgraden beschränkt erfolgt.

Eine erste Weiterbildung der erfindungsgemäßen Vorrichtung sieht vor, dass die Sensorik in der Vorrichtung enthalten ist, wobei vorzugsweise eine Inertial-Sensorik zum Einsatz kommt, die sich in konstruktiv-technischer Hinsicht einfach, kostengünstig und platzsparend ausbilden lässt. Alternativ kann jedoch vorgesehen sein, dass die Sensorik außerhalb der Vorrichtung angeordnet ist, wobei vorzugsweise zum Erfassen von Bewegungen der Vorrichtung externe, außerhalb der Vorrichtung angeordnete Sensoren vorgesehen und mit einer Steuereinheit des Handhabungsgeräts und/oder einer Recheneinheit der Vorrichtung verbunden sind. Als externe Sensoren kommen Kameras, Laser-Triangulationssysteme ("Constellation"), Ultraschallsensoren etc. in Frage. Die Beeinflussungs-Vorrichtung wäre dann gegebenenfalls um geeignete Marken oder Empfänger/Sensoren zu ergänzen, die das externe Messverfahren unterstützen bzw. überhaupt erst ermöglichen. Zur umfassenden Einflussnahme auf Gesamtbewegungen des Roboters ist die eingesetzte Sensorik vorzugsweise zum gleichzeitigen Bestimmen von Stellungen in allen Freiheitsgraden der Bewegung des Handhabungsgeräts ausgebildet.

Weiterhin ist erfindungsgemäß vorgesehen, dass bei Überschreiten vorbestimmter Parameterwerte für die Messungenauigkeit nach Maßgabe der Kontrolleinrichtung keine Beeinflussung des Handhabungsgeräts möglich ist. Somit wird, sobald die in der Beeinflussungs-Vorrichtung eingesetzte Sensorik aufgrund einer Sensordrift die für eine Robotersteuerung erforderliche Genauigkeit nicht mehr erreicht, die Einflussnahmemöglichkeit für eine Bedienperson unterbunden, um eine ausreichende Bediensicherheit zu erhalten. Zur anschließenden Reduzierung der Messungenauigkeit weist eine erfindungsgemäße Vorrichtung vorzugsweise eine Kalibriereinrichtung auf.

Zum Ermöglichen einer intuitiven Handhabbarkeit der erfindungsgemäßen Vorrichtung kann weiterhin vorgesehen sein, dass diese mindestens eine geometrisch ausgezeichnete Vorzugsrichtung, wie eine Spitze oder dergleichen, besitzt. In diesem Zusammenhang bietet sich insbesondere eine stiftartige Ausbildung der Vorrichtung an.

In äußerst bevorzugter Weiterbildung weist eine erfindungsgemäße Vorrichtung zusätzlich eine Messeinrichtung zum Bestimmen beim Berühren eines Objekts auf die Vorrichtung einwirkender Kontaktkräfte oder Momente auf. Unter Einbeziehung der durch die zusätzliche Messeinrichtung gelieferten Daten kann die erfindungsgemäße Vorrichtung demnach zusätzlich zu einer Bewegungssteuerung des Roboters auch im Hinblick auf mit diesem durchzuführende Bearbeitungsvorgänge eingesetzt werden.

Die Messdaten der Vorrichtung, d.h. Stellungsdaten und ggf. Krafteinwirkungs-Daten lassen sich vorzugsweise zur zeitgleichen Bewegungsführung des Handhabungsgeräts verwenden, d.h. der Roboter kann "online" nach Maßgabe der Beeinflussungs-Vorrichtung durch eine Bedienperson geführt werden. Zusätzlich oder alternativ sind die Messdaten der Vorrichtung auch "offline" zum Erstellen von Bewegungsprogrammen für das Handhabungsgerät verwendbar, vorzugsweise in einer entsprechenden Steuerungseinrichtung des Roboters. Auf diese Weise lassen sich mittels der erfindungsgemäßen Vorrichtung durchgeführte Bewegungsabläufe dauerhaft zur Steuerung von Robotern verwenden.

Um insbesondere einer Bedienperson ein sicheres und einfaches Benutzen der erfindungsgemäßen Vorrichtung zu ermöglichen, weist diese in Weiterbildung vorzugsweise Bedien- und Anzeigeeinrichtungen zum Auswählen und Überwachen der verschiedenen Betriebsmoden (Online- oder Offline-Beeinflussung, Kalibrierung usw.) auf. Dabei kann es sich insbesondere um Mittel zur Spracherkennung und/oder Mittel zum Führen einer Bedienperson, insbesondere zum interaktiven Führen durch akustische und/oder optische Signale, handeln.

Um weiterhin eine flexible Einsetzbarkeit der erfindungsgemäßen Vorrichtung auch mit unterschiedlichen Robotern/Steuerungseinheiten zu ermöglichen, kann im Rahmen einer äußerst bevorzugten Weiterbildung vorgesehen sein, dass die Vorrichtung eine Rechnereinheit zum Verarbeiten von Messdaten in Steuerungsdaten für das Handhabungsgerät aufweist. In Weiterbildung ist die erfindungsgemäße Vorrichtung vorzugsweise mittels einer Übertragungseinrichtung zum Übertragen von Daten an das Handhabungsgeräts bzw. dessen Steuerung ausgebildet. Die Übertragung erfolgt vorzugsweise drahtlos.

Weitere Eigenschaften und Vorteile der Erfindung ergeben sich aus der nachfolgenden Beschreibung von Ausführungsbeispielen anhand der Zeichnung. Es zeigt:
- Fig. 1: eine schematische Darstellung einer möglichen Ausgestaltung der erfindungsgemäßen Vorrichtung;
- Fig. 2: in einer schematischen Darstellung die Anbindung einer erfindungsgemäßen Vorrichtung an eine Robotersteuerung;
- Fig. 3: schematisch eine mögliche Ausgestaltung eines Sensormoduls der erfindungsgemäßen Vorrichtung;
- Fig. 4a: eine Posenvorgabe für einen Roboter unter Verwendung einer erfindungsgemäßen Vorrichtung;
- Fig. 4b: die den Posenvorgaben der Fig. 4a zugeordneten Bewegungen eines Roboters;
- Fig. 5a,b: den Ablauf eines erfindungsgemäßen Verfahrens analog zur Darstellung der Fig. 4a, b, jedoch bei detaillierter Bahnvorgabe für den Roboter unter Verwendung einer erfindungsgemäßen Vorrichtung;
- Fig. 6a,b,c: weitere mögliche Bewegungen eines Roboters bei Beeinflussung mittels einer erfindungsgemäßen Vorrichtung;
- Fig. 7: in einem Ablaufdiagramm eine erfindungsgemäße Bewegungsvorgabe für einen Roboter; und
- Fig. 8: anhand eines Ablaufdiagramms eine erfindungsgemäße Koordinatensystem-Vorgabe für einen Roboter.

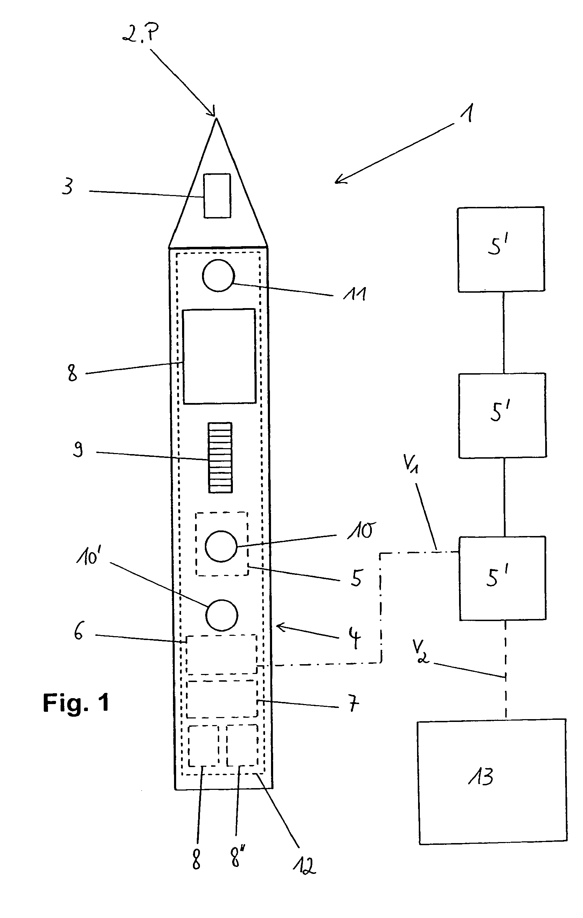

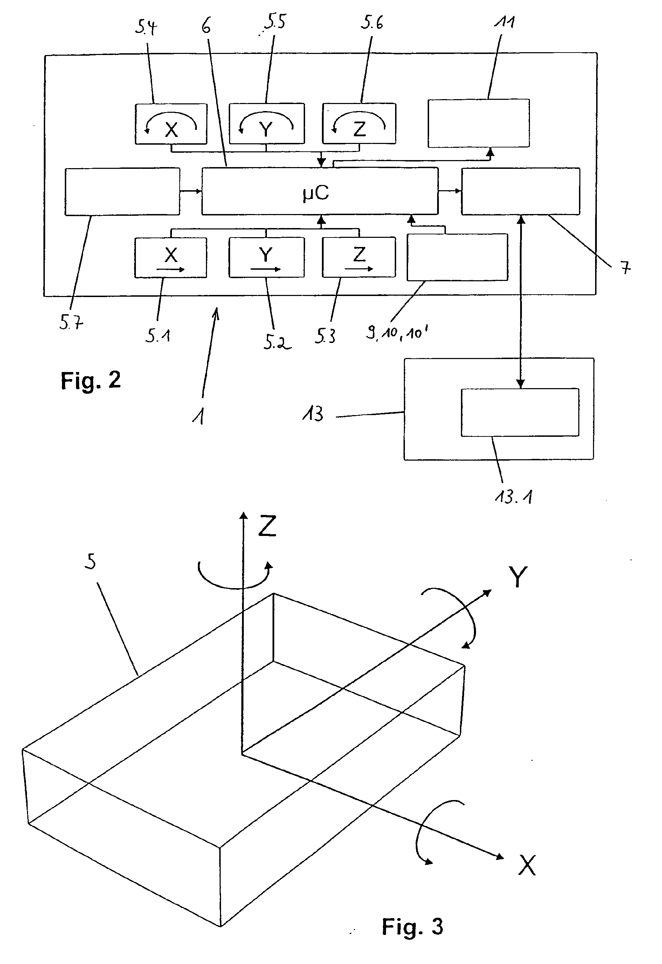

Die Fig. 1 zeigt schematisch eine mögliche Ausgestaltung der erfindungsgemäßen Vorrichtung als stiftähnliches Gerät 1. Jedoch ist es alternativ auch möglich, die erfindungsgemäße Vorrichtung innerhalb eines herkömmlichen Roboterbediengeräts auszubilden. Es hat sich allerdings gezeigt, dass sich speziell stiftähnlich ausgeformte Geräte aufgrund ihrer ausgeprägten inhärenten Vorzugsrichtung in besonders einfacher Weise als intuitiv brauchbare Beeinflussungs-Vorrichtung einsetzen lassen. Dementsprechend weist die erfindungsgemäße Vorrichtung 1 eine ausgewiesene Spitze 2 auf, die mit einem Referenzpunkt R der Vorrichtung 1 zusammenfällt. Im Bereich der Spitze 2 weist die erfindungsgemäße Vorrichtung gemäß der Fig. 1 weiterhin eine Messeinrichtung 3 in Form eines Kraft-Momenten-Sensors auf, um mittels der Vorrichtung 1 auch das Teachen von Kräften, beispielsweise Einwirkkräften auf ein Werkstück (nicht gezeigt), zu ermöglichen. Der untere, schaftartige Teil 4 der Vorrichtung 1 umfasst gemäß der in Fig. 1 gezeigten Ausgestaltung die weiteren Funktions-, Bedien- und Anzeigeeinrichtungen der Vorrichtung 1: Diese weist zunächst ein Sensormodul 5 auf, das vorzugsweise zum Erfassen von translatorischen und rotatorischen Bewegungen in sechs Freiheitsgraden, d.h. in drei translatorischen und drei rotatorischen Freiheitsgraden ausgebildet ist, z.B. über Beschleunigungsmesser und Kreisel (vergleiche Fig. 3), was dem Fachmann an sich geläufig ist. Das erfindungsgemäße Verfahren erlaubt - wie nachfolgend noch deutlich werden wird - insbesondere die Verwendung relativ ungenauer und somit preiswerter Beschleunigungsmesser, Kreisel oder ähnlich ungenauer Messgeräte im Sensormodul 5. Weiterhin umfasst die erfindungsgemäße Vorrichtung 1 eine Rechen- und Speichereinheit 6, mittels derer ein Großteil der Vorverarbeitung der von der Messeinrichtung 3 und vom Sensormodul 5 gelieferten Messwerte (Rohdaten) bereits innerhalb der Vorrichtung 1 durchgeführt werden kann und die erfindungsgemäß auch als Kalibriereinrichtung sowie als Kontrolleinrichtung für die Messgenauigkeit des Sensormoduls 5 programmtechnisch eingerichtet ist. Es ist jedoch auch möglich, die mittels der Messeinrichtung 3 und dem Sensormodul 5 gewonnenen Rohdaten direkt an eine Robotersteuerung 13 (vergleiche auch Fig. 2) zu übertragen.

Alternativ zu der bislang besprochenen vorrichtungsinternen Anordnung des Sensormoduls 5 können im Zuge der Erfindung auch externe Sensoren 5' zum Bestimmen einer Stellung der erfindungsgemäßen Beeinflussungs-Vorrichtung 1 im Raum vorgesehen sein, wie in Fig. 1 ebenfalls dargestellt ist. Bei den externen Sensoren 5' kann es sich beispielsweise um Kameras, Laser-Triangulationssysteme, Ultraschall-Sensoren oder dergleichen handeln. Die Vorrichtung 1 weist in diesem Fall geeignete, mit den Sensoren 5' zusammenwirkende Markierungen und/oder Empfänger/Sender auf, die das entsprechende, externe Stellungs-Bestimmungs-Verfahren unterstützen bzw. überhaupt erst ermöglichen. Derartige Markierungen oder dergleichen sind in der Fig. 1 aus Gründen der Übersichtlichkeit nicht gezeigt, dem Fachmann jedoch an sich selbstverständlich bekannt.

Die externen Sensoren 5' können entweder mit der Recheneinheit 6 der Vorrichtung 1 oder mit der Robotersteuerung 13 in Wirkverbindung stehen, was in der Fig. 1 durch eine strichpunktierte Verbindungslinie V₁ bzw. eine gestrichelte Verbindungslinie V₂ ausgedrückt ist.

Zur Datenübertragung weist die erfindungsgemäße Vorrichtung 1 weiterhin eine Übertragungseinrichtung 7 auf, die insbesondere als Funkmodul zur drahtlosen Datenübertragung ausgebildet sein kann. Darüber hinaus besitzt die erfindungsgemäße Vorrichtung 1 eine Anzeigeeinrichtung 8, beispielsweise in Form eines LCD-Displays oder eines Touchscreens, mit einer ersten zugeordneten Bedienungseinrichtung in Form eines Jog-Rads 9, sowie ein Mikrophon 8' und einen Lautsprecher 8 " in Wirkverbindung mit geeigneten hard- und softwaretechnischen Einrichtungen (nicht gezeigt) für eine Sprachsteuerung der Vorrichtung 1 durch akustische Ein- und Ausgaben. Weiterhin gezeigt sind in Fig. 1 noch weitere Bedienelemente, wie Tasten und/oder Druckschalter 10, 10', sowie eine Beleuchtungs- und/oder Anzeigeeinrichtung 11, vorzugsweise in Form einer Leuchtdiode LED. Zusätzliche, an sich bekannte Bedienelemente, wie Joystick, Touchpad, Schalter oder dergleichen sind möglich, um zusätzliche Interaktionsmöglichkeiten einer Bedienperson mit der erfindungsgemäßen Vorrichtung 1 zu schaffen. Anstelle einer LED 11, wie in Fig. 1 gezeigt, können im Bereich der Spitze 2 mehrere Leuchtdioden konzentrisch angeordnet sein, um insbesondere die Feinpositionierung eines Roboters durch zielgerichtetes Beleuchten der Umgebung zu erleichtern.

Grundsätzlich eignet sich ein rotationssymmetrischer Körper, wie der gezeigte Stift, nur bedingt zum Festlegen von sechs Freiheitsgraden, wie dies zum Beeinflussen eines Mehrachs-Industrieroboters erforderlich ist. Für eine Bedienperson muss die Drehung um die Längsachse (evtl. Symmetrieachse) des Stiftes optisch erkennbar bleiben, d.h. es darf keine absolute Rotationssymmetrie bestehen. Dies wird erfindungsgemäß schon dadurch erreicht, dass die Vorrichtung 1 bestimmte Bedien- und Anzeigeelemente (s.o.), die ihr eindeutig eine Vorder- und Rückseite zuweisen, und die erwähnte Spitze 2 aufweist, die zur Kennzeichnung von "oben" und "unten" dient.

Alternativ zur in Fig. 1 gezeigten drahtlosen Verbindung zwischen der erfindungsgemäßen Vorrichtung 1 und einer Robotersteuerung (Fig. 2) kann natürlich auch eine Kabelverbindung vorgesehen sein, wobei das Kabel vorzugsweise an dem der Spitze abgewandten, unteren Ende des schaftartigen Teils 4 der Vorrichtung 1 austritt.

Zur Energieversorgung weist die erfindungsgemäße Vorrichtung 1 vorzugsweise eine interne Spannungsquelle 12 in Form einer Anzahl (herkömmlicher) Batterien oder Akkumulatoren auf. Weiterhin besitzt die erfindungsgemäße Vorrichtung 1 vorzugsweise eine sogenannte "Docking-Station" (nicht dargestellt), so dass beispielsweise die Akkus der Vorrichtung 1 problemlos geladen werden können und darüber hinaus ein sicherer Aufbewahrungsort für die Vorrichtung 1 existiert. Die Docking-Station kann zusätzlich geeignete Verbindungen zum Übertragen und Abgleichen von Daten zwischen einer Robotersteuerung und der erfindungsgemäßen Vorrichtung bereit stellen.

Die Docking-Station kann in ein herkömmliches Bedienhandgerät integriert sein, sei es nur als sicherer Aufbewahrungsort oder zur Energie- und Datenübertragung an die Beeinflussungs-Vorrichtung. Darüber hinaus kann durch Einstecken der Beeinflussungs-Vorrichtung in das Bedienhandgerät das Bedienhandgerät als solches um viele Funktionalitäten erweitert werden, z.B. Lageerkennung einer Bedienperson, die das Bedienhandgerät hält, in Bezug auf den Roboter. Dies kann aus Sicherheitsgründen erfolgen oder auch das Handverfahren mittels Spacemouse/Verfahrtasten einfacher machen.

Beispielsweise ließe sich so das Tool-Koordinatensystem immer so in Bezug auf das Bedienhandgerät mit integrierter Beeinflussungs-Vorrichtung ausrichten, dass ein Auslenken der Spacemouse nach "rechts" auch immer ein Verfahren des Roboters nach "rechts" bewirkt. Die Bedienperson muss sich also nicht merken, wie das Tool-Koordinatensystem liegt, sondern kann davon ausgehen, dass es immer einen bestimmten Winkel (vorzugsweise parallel) zum Bedienhandgerät einnimmt .

Mittels der in der Vorrichtung 1 enthaltenen Rechen- und Speichereinrichtung 6 ist es möglich, personenbezogene Daten für die Vorrichtung zu speichern, die durch eine Robotersteuerung (Fig. 2) verwendet werden können, um Bedienpersonen zu identifizieren und gemäß dieser Identifikation bestimmte Benutzerrechte freizugeben. Somit eignet sich die erfindungsgemäße Vorrichtung 1 in ihrer Ausgestaltung gemäß Fig. 1 zur Speicherung von Benutzerprofilen (z.B. Anfänger oder Experte) und zu einer Authentifizierung von Bedienpersonen.

Das Sensormodul 5 kann zusätzlich zu den angesprochenen Sensormitteln noch weitere Sensormittel aufweisen, wie Magnetfeldsensoren, Temperatursensoren oder dergleichen, was an sich bekannt ist. Insbesondere mit Hilfe von Magnetfeldsensoren lässt sich - ein messbares ungestörtes Magnetfeld, wie das Erdmagnetfeld, vorausgesetzt - die Orientierung des in der Vorrichtung 1 enthaltenen inertialen Messsystems driftfrei ermitteln, beispielsweise zu Kalibrierzwecken.

Die Fig. 2 zeigt anhand eines Blockschaltbilds nochmals den Aufbau einer erfindungsgemäßen Vorrichtung, insbesondere einer Vorrichtung 1 gemäß der Fig. 1, sowie deren Anbindung an die Steuerungseinheit 13 eines Roboters (Robotersteuerung). Die Darstellung der Fig. 1 entsprechende Funktionselemente der erfindungsgemäßen Vorrichtung 1 sind mit denselben Bezugszeichen versehen.

Die Robotersteuerung 13 weist erfindungsgemäß eine mit der Übertragungseinrichtung 7 der Vorrichtung 1 zusammenwirkende Übertragungseinrichtung 13.1 auf. Die in der Fig. 2 als Mikrocontroller *µ*C dargestellte Recheneinheit 6 der Vorrichtung 1 empfängt Signale von dem Sensormodul 5 (Fig. 1), das in der Darstellung der Fig. 2 in mehrere Einzelsensoren unterteilt dargestellt ist: Gezeigt sind exemplarisch drei Beschleunigungssensoren 5.1-5.3 für Beschleunigungen in drei zueinander senkrechten Raumrichtungen X, Y, Z sowie drei Drehratensensoren 5.4-5.6 zur Bestimmung von Drehraten um jeweils eine der genannten drei Raumrichtungen. Weiterhin ist in Fig. 2 als Teil des Sensormoduls 5 ein weiterer Sensor 5.7, beispielsweise ein Temperatur- oder Magnetfeldsensor gezeigt, der ebenfalls mit dem Mikrocontroller *µ*C verbunden ist. Darüber hinaus empfängt der Mikrocontroller *µ*C (Eingabe-)Signale der Bedienungseinrichtungen 9, 10, 10' (vergleiche Fig. 1). Ausgangssignale des Mikrocontrollers *µ*C gelangen über die Übertragungseinrichtung 7, vorzugsweise ein Funkmodul, zur Robotersteuerung 13, die ihrerseits - wie in Fig. 2 durch einen Doppelpfeil ausgedrückt - in der Lage ist, mittels ihrer eigenen Übertragungseinrichtung 13.1 über die Übertragungseinrichtung 7 der Vorrichtung 1 mit deren Recheneinheit 6 zu kommunizieren, beispielsweise um roboterspezifische Informationen, Auswahlmenüs oder dergleichen auf der Anzeigeeinheit 8 (Fig. 1) der Vorrichtung 1 zur Anzeige zu bringen.

In Fig. 3 ist schematisch eine mögliche Ausgestaltung des Sensormoduls 5 der Fig. 1 gezeigt, das in der dargestellten Ausgestaltung zum Erfassen von Beschleunigungen und Drehraten in bzw. um drei zueinander orthogonale (n) Raumrichtungen X, Y, Z ausgebildet ist. Die eingesetzten Sensoren 5.1-5.6 (Fig. 2) sind an sich bekannt; es kann sich dabei insbesondere um bekannte Beschleunigungssensoren handeln, wie relativ kostengünstige Kreisel und/oder elektrostatische (kapazitive) Sensoren, die - wie nachfolgend im Zuge der Beschreibung des erfindungsgemäßen Verfahrens noch deutlich werden wird - ein relativ ungenaues Messverhalten im Sinne einer geringen Driftstabilität aufweisen können.

Anhand der folgenden Fig. 4a-8 wird dargestellt, wie sich die vorstehend beschriebene erfindungsgemäße Vorrichtung 1 zum Beeinflussen eines Handhabungsgeräts, wie eines Industrie-Roboters, im Zuge eines erfindungsgemäßen Verfahrens einsetzen lässt. Die erfindungsgemäße Vorrichtung 1, im folgenden auch als Beeinflussungs-Vorrichtung bezeichnet, dient zur Vorgabe von Bewegungen von Mehrachsmaschinen, insbesondere zum Handverfahren von Robotern mit besonderem Fokus auf das Teachen von Punkten und Bahnen. Dabei folgt die Bewegung des Roboters durch wiederholten Wechsel zwischen einer Bewegungsvorgabe (Posenvorgabe) mit Hilfe der Beeinflussungs-Vorrichtung und einer anschließenden Bewegungsfreigabe zur Bewegungsausführung durch den Roboter.

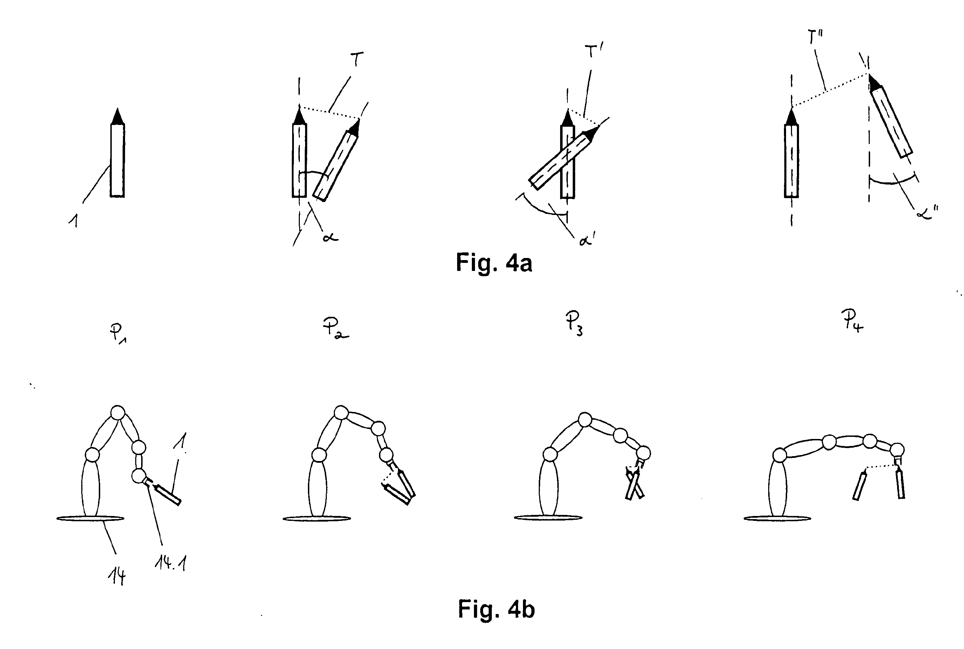

In den Fig. 4a, b ist dargestellt, wie sich ein Roboter 14 unter Verwendung der Beeinflussungs-Vorrichtung 1 von seiner augenblicklichen Pose (Position und Orientierung) P₁ (links in Fig. 4b) über Zwischenposen P₂, P₃ in eine Zielpose P₄ (rechts in Fig. 4b) verfahren lässt, indem abwechselnd eine Bewegung mit der erfindungsgemäßen Vorrichtung 1 vorgegeben (Fig. 4a) und jeweils zugeordnete Bewegung des Roboters 14 ausgeführt wird (Fig. 4b). In der Regel wird dabei die Beeinflussungs-Vorrichtung durch eine nicht gezeigte Bedienperson handgeführt. Die in der Fig. 4a dargestellten Bewegungsvorgaben mittels der erfindungsgemäßen Vorrichtung 1 entsprechen (von ihrer zweidimensionalen Projektion) Translationsbewegungen T, T', T'' (gestrichelte Linien in Fig. 4a) verbunden mit Umorientierungen insbesondere eines Roboterwerkzeugs 14.1 bzw. des TCP (Tool Center Point) des Roboters 14, was in der Fig. 4a durch Drehen der Vorrichtung 1 um einen Winkel α, α', α " dargestellt ist. Wie aus den Fig. 4a, b ersichtlich, werden erfindungsgemäß zugleich Translationsbewegungen T-T" sowie Rotationsbewegungen α-α " des Roboters 14 in dessen sämtlichen Bewegungsfreiheitsgraden mit Hilfe der Beeinflussungs-Vorrichtung 1 vorgegeben.

Da eine Messgenauigkeit der in der erfindungsgemäßen Vorrichtung 1 verwendeten Sensorik und/oder ein Bewegungsradius der Bedienperson in der Regel nicht ausreichen, um den gesamten Weg des Roboters 14 von der Startpose P₁ in die zielpose P₄ in einem einzigen Verfahrensschritt vorzugeben, wird die gesamte Bewegung in mehrere Teilabschnitte P₁-P₂, P₂-P₃, ... unterteilt, wobei ein schnelles Wechselspiel aus einer Bewegungsvorgabe und einer Bewegungsfreigabe mit Hilfe der Vorrichtung 1 sowie einer Bewegungsausführung durch den Roboter 14 realisiert wird: Zunächst wird die Sensorik der erfindungsgemäßen Vorrichtung 1 in deren Ausgangsstellung (links in Fig. 4a) kalibriert, d.h. vorzugsweise "genullt" (sämtliche Positions- oder Lagewerte werden auf Null gesetzt). Da die erfindungsgemäße Vorrichtung 1 gemäß der Fig. 2 mit der Steuerung 13 des Roboters 14 kommuniziert, ist diesem bzw. dessen Steuerung auf diese Weise auch die relative Pose der Vorrichtung 1 bezüglich des Roboters 14 bekannt (vergleiche Fig. 4b), so dass die Stellung einer vorzugsweise durch eine Bedienperson gehaltenen Vorrichtung 1 der Orientierung und Position des TCP des angeschlossenen Roboters 14 entspricht (links in Fig. 4b). Anschließend wird eine relative Lageänderung der Vorrichtung 1 in Richtung der zielpose P₄ durchgeführt, wobei gemäß der in Fig. 4a,b gezeigten Ausgestaltung keinerlei Bahninformation aufgezeichnet wird, d.h. lediglich die Stellungen P₁ und P₂ der erfindungsgemäßen Vorrichtung 1 werden erfasst. Anschließend wird der Roboter 14 veranlasst, die gewünschte, zugeordnete Posenveränderung, z.B. bezogen auf seinen TCP, herbeizuführen. Die Zeit, die ausgehend von der Pose P₁ bis zum Erreichen einer Ziel- oder Zwischenpose, hier der Pose P₂, verbleibt, d.h. diejenige Zeit, während der Bewegungsvorgaben für den Roboter 14 mittels der Vorrichtung 1 möglich sind, entspricht der Zeit, während der die insbesondere bei preiswerten Sensoren unweigerlich auftretenden Driftfehler vernachlässigt werden. Sie hängt insbesondere von der Art der mit der Vorrichtung 1 ausgeführten Bewegung ab. Zu diesem Zweck überwacht die Recheneinheit 6 der erfindungsgemäßen Vorrichtung 1 die bei der erforderlichen zweifachen Integration der von den Beschleunigungs- und Drehratensensoren 5.1-5.6 (vergleiche Fig. 2) gelieferten Messwerten entstehende Positions- und Orientierungsungenauigkeit und gibt, wenn dieser Zeitpunkt erreicht ist, ein Signal aus, mit dessen Hilfe die Bewegungsvorgabe gestoppt wird. Bei diesem Signal kann es sich beispielsweise um ein optisches oder akustisches Signal an eine Bedienperson handeln, so dass diese eine Bewegungsvorgabe aus freien Stücken abbrechen kann. Allerdings ist erfindungsgemäß auch vor Ausgabe eines derartigen Signals das Beenden einer Bewegung durch die Bedienperson jederzeit möglich. Es ist jedoch erfindungsgemäß ebenso möglich, automatisch die zu dem genannten Zeitpunkt erreichte Ziel- oder Zwischenpose aufzuzeichnen und entsprechend weitere vorgegebene Bewegungen der Vorrichtung 1 zu ignorieren. Vorzugsweise kommt jedoch eine Kombination der beiden vorstehend beschriebenen Ausgestaltungen zum Einsatz. Auf diese Weise lässt sich erfindungsgemäß eine gewünschte Genauigkeit der Roboterbewegung trotz der unvermeidlichen Sensordrift garantieren, wobei der vorstehend beschriebene Wechsel zwischen Bewegungsvorgabe und Bewegungsausführung nach Maßgabe der in diesem Falle als Kontrolleinrichtung fungierenden Recheneinheit erfolgt.

Zur Vorgabe der Gesamtbewegung P₁-P₄ des Roboters 14 wird die Vorrichtung 1 folglich jeweils über kurze Bahnabschnitte bewegt, woraufhin der Roboter veranlasst wird, die gewünschte Posenänderung herbeizuführen. Eine Bedienperson wird demnach direkt oder indirekt zum wiederholten Kalibrieren, d.h. zum Nullen des Koordinatensystems der Vorrichtung 1 in Bezug auf die gegenwärtige Pose des Roboters 14 aufgefordert bzw. gezwungen, so dass die Teilbewegungen jeweils eine erforderliche Genauigkeit aufweisen. Dies geschieht dadurch, dass
- die erfindungsgemäße Vorrichtung 1 bzw. deren Recheneinheit 6 (Mikrocontroller *µ*C) keine andere Art der Bewegungsvorgabe als das Zusammensetzen von Bahnsegmenten - wie vorstehend beschrieben - akzeptiert, wobei vor jeder Teilbewegung eine Kalibrierung der Vorrichtung 1 erfolgen muss. Der Abschluss einer erfolgreichen Kalibrierung wird einer Bedienperson beispielsweise durch das Aufleuchten einer LED (vergleiche Bezugszeichen 11 in Fig. 1) angezeigt, so dass bekannt ist, ab welchem Zeitpunkt eine Bewegungsaufzeichnung beginnen darf;
- die Bedienperson nach Kalibrierung eines bestimmten Weges und/oder eines bestimmten Winkels in wenigstens einer der Koordinatenrichtungen zur Kalibration aufgefordert wird, wobei für Wege und Winkel je nach Messprinzip und Sensor unterschiedliche Grenzwerte gelten können. Die Kalibrations-Aufforderung wird beispielsweise durch LED oder durch Verweigerung der erforderlichen Bewegungsfreigabe (siehe unten) angezeigt;
- die Bedienperson durch einen in der Recheneinheit 6 (Fig. 1) integrierten Watchdog-Timer zum wiederholten Kalibrieren gezwungen wird, was wiederum beispielsweise durch Verlöschen der LED, die einen kalibrierten Zustand der Vorrichtung 1 signalisiert, und/oder Verweigerung der Bewegungsfreigabe (siehe unten) erfolgt.

Nach erfolgter Bewegungsaufzeichnung unter Verwendung der erfindungsgemäßen Vorrichtung 1 ist - wie bereits erwähnt - eine Freigabe der zugeordneten Bewegung des Roboters 14 notwendig. Diese erfolgt vorzugsweise dadurch, dass die Bedienperson eine Bestätigungseinrichtung der erfindungsgemäßen Vorrichtung 1, wie eine der in Fig. 1 gezeigten Tasten 10, 10', betätigt, die der Zustimmtaste eines herkömmlichen Bedien-Handgeräts entspricht. Die Bewegungsfreigabe kann jederzeit entzogen und erneut erteilt werden, bis die vorgegebene (Teil-)Bewegungsbahn komplett abgefahren oder die Bewegungsdurchführung komplett abgebrochen wurde. Ein solcher Abbruch kann beispielsweise durch erneutes Nullen des Vorrichtungs-Koordinatensystems auf einen bestimmten Tastendruck, ein Sprachkommando, eine Geste oder dergleichen erfolgen. Gemäß der Fig. 4b bewegt sich der Roboter 14, wenn die Bewegungsvorgabe - wie vorstehend beschrieben - erteilt wird, wahlweise auf einer schriellstmöglichen Bahn, einer linearen Bahn oder einer seiner Umgebung angepassten (kollisionsfreien) Bahn, so dass beispielsweise der TCP eine Lageänderung entsprechend der mit der erfindungsgemäßen Vorrichtung 1 bestimmten Stellungsänderung erfährt. Anschließend wird mittels der erfindungsgemäßen Vorrichtung 1 ein weiteres Bahnsegment aufgezeichnet, wobei eine Nullung der Vorrichtung 1 nur dann erforderlich ist, wenn seit der letzten Nullung eine hinreichend lange Zeit vergangen ist, so dass davon ausgegangen werden muss, dass die aufintegrierte Messungenauigkeit die Bedienung des Roboters 14 unnötig erschweren würde. Nach anschließender erneuter Bewegungsfreigabe verfährt der Roboter 14 in die nächste (Zwischen-)Pose. Sollte die von der Bedienperson gewünschte Zielpose P₄ noch immer nicht erreicht sein, wird ein weiteres Bahnsegment, ggf. nach erneuter vorheriger Nullung der Vorrichtung 1, aufgezeichnet. Nach Erreichen der Zielpose P₄ wird diese durch entsprechende Eingabe an der erfindungsgemäßen Vorrichtung 1, beispielsweise durch Drücken einer der Tasten 10, 10', übernommen und - ggf. nach erfolgter Verarbeitung in der Recheneinheit 6 (Fig. 1, 2) - an die Robotersteuerung 13 übertragen, wo sie in ein Roboter-Steuerungsprogramm übernommen werden kann.

Das Jog-Rad 9 dient zur Vorgabe von Override-, Skalierungs-oder Geschwindigkeits-Faktoren oder zur Menü-Auswahl. Beispielsweise kann ein Drehen am Jog-Rad 9 nach vorne eine Beschleunigung des Roboters zur Folge haben, eine Drehung nach hinten eine Verlangsamung. Viele Jog-Räder haben zudem bereits eine Drucktasten-Funktion integriert, die zur Übernahme von Punkten in ein Programm oder zum Akzeptieren einer erreichten Pose verwendbar ist, um so eine konstruktive Verkleinerung der Beeinflussungs-Vorrichtung zu erreichen.

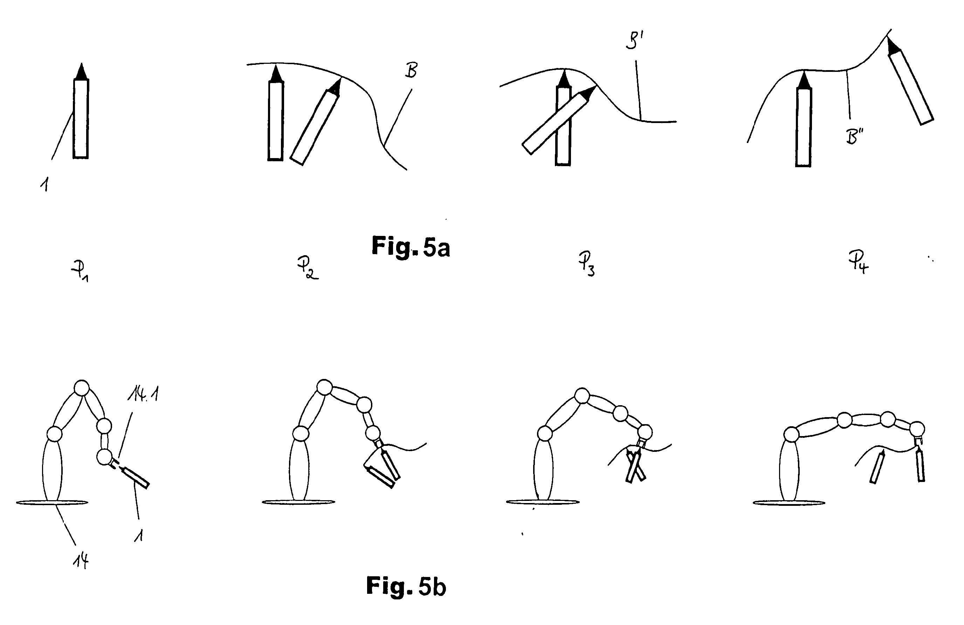

Die Fig. 5a, b zeigen die Bewegung eines Roboters 14 in mehrere (Ziel-)Posen P₁-P₄ mittels einer erfindungsgemäßen Vorrichtung 1, wobei Bahninformation betreffend die Bewegungsbahn B, B', B" zwischen den einzelnen Posen aufgezeichnet werden. Der weitere Verfahrensablauf entspricht dem bereits vorstehend anhand der Fig. 4a,b erläuterten, d.h. eine Bedienperson gibt mittels der Vorrichtung 1 abwechselnd Posen bzw. Stellungen vor und erteilt entsprechende Bewegungsfreigaben. Erfindungsgemäß bedeutet ein Aufzeichnen von Bahninformationen, dass nach Maßgabe eines bestimmten Messtaktes der verwendeten Sensorik bzw. des Mikrocontrollers *µ*C alle zwischen der Start- und der (Zwischen-)Zielpose, beispielsweise den Posen P₁, P₂, während der Stellungsänderung der Beeinflussungs-Vorrichtung 1 gemessenen Posen erfasst werden. Wiederum nach erfolgter Bewegungsvorgabe bewegt sich der Roboter 14 auf der aufgezeichneten Bahn B, B', B" dergestalt, dass sich beispielsweise die Lage des TCP entsprechend der Stellungsänderung der Vorrichtung 1 ändert. Optional manipuliert die Robotersteuerung 13 (Fig. 2) die aufgezeichnete Bahn B, B', B" in geeigneter Art und Weise, beispielsweise durch Glätten, Anpassung an Maximal-Geschwindigkeiten des Roboters 14 oder dergleichen, und legt sie beispielsweise in Form eines Splines oder mehrerer linearer Segmente in einem Steuerungsprogramm für den Roboter 14 ab. Sollte eine abgefahrene Bahn, beispielsweise die Bahn B, für ein Verfahren des Roboters 14 ungeeignet sein, beispielsweise aufgrund einer drohenden Kollision, so fährt der Roboter 14 automatisch, und/oder auf Tastendruck in die vorherige (Ziel-)Pose, hier die Pose P₁, so dass mit einer erneuten Bahnaufzeichnung begonnen werden kann. Über die an der erfindungsgemäßen Beeinflussungs-Vorrichtung integrierten Bedieneinrichtungen oder weitere, nicht explizit dargestellte Interaktionsformen, wie Sprachsteuerung oder dergleichen, besteht prinzipiell immer die Möglichkeit, sämtliche bereits geteachte Bahnsegmente erneut zu manipulieren, zu überspringen, zu löschen usw.

Wie in die Fig. 6a-c dargestellt, ist eine Skalierung der gesamten auszuführenden Roboterbewegung in Bezug auf Raum und Zeit möglich. Hierzu ist in den Fig. 6a-c jeweils untereinander die mit Hilfe der erfindungsgemäßen Vorrichtung 1 durchgeführte Bewegungsvorgabe in der oberen Zeile der Darstellung gezeigt, unter der jeweils in zeitlicher Abfolge von oben nach unten die zugeordneten Bewegungszustände des Roboters 14 bzw. dessen Werkzeug 14.1 oder TCP dargestellt sind.

Die Fig. 6a zeigt eine Bewegung der erfindungsgemäßen Vorrichtung 1 von einer Start- zu einer Endpose sowie (darunter) die dazugehörige relative Stellungsänderung des Roboters 14 von einer Start- in eine Endpose bezogen auf den TCP, d.h. die Spitze des Werkzeugs 14.1. Hierbei wird die Stellungsänderung der Vorrichtung 1 ohne jegliche Skalierung direkt in eine entsprechende Stellungsänderung des Roboters 14 umgesetzt. Die dargestellte Zwischenpose (drittes Bild von oben in Fig. 6a) dient lediglich einer Veranschaulichung der Roboterbewegung.

In der Fig. 6b ist eine Bewegung des Roboters 14 unter Verwendung einer Skalierung der Bewegung gezeigt. Während die mittels der Vorrichtung 1 vorgenommene Bewegungsvorgabe exakt derjenigen der Fig. 6a entspricht, verfährt der Roboter 14 auf einer wesentlich kürzeren Bahn, was durch einen Vergleich der Fig. 6a und 6b leicht ersichtlich ist, d.h. der verwendete Skalierungsfaktor hat einen Wert kleiner Eins.

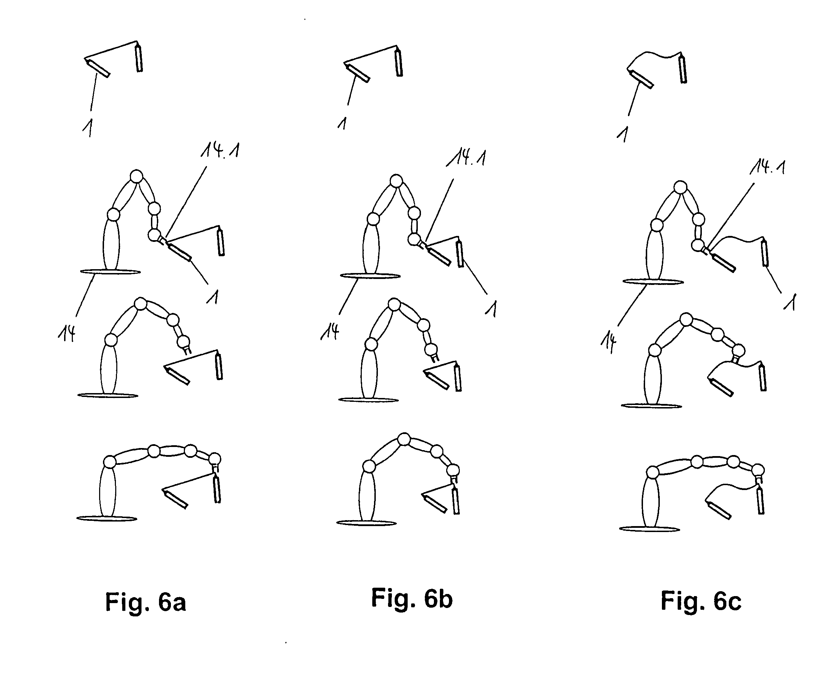

Die Fig. 6c zeigt ein Verfahren des Roboters 14 auf einer aufgezeichneten Bahn, jedoch wiederum ohne Skalierung. Entsprechend erreicht der Roboter gemäß der Fig. 6a und der Fig. 6c eine identische zielpose (jeweils unterstes Bild der Fig. 6a,c).

Durch die vorgeschlagene Skalierung kann der Roboter 14 sehr feinfühlig positioniert und orientiert werden, wenn die Bewegungen der erfindungsgemäßen Vorrichtung 1 sehr viel größer als die tatsächlich durchgeführte Bewegung des Roboters 14 ist. Andererseits lässt sich auf diese Weise auch z.B. ein sehr großer Roboter komfortabel programmieren, indem die Vorrichtung 1 nur wenig bewegt wird, dabei jedoch eine große, zugeordnete Bewegung des Roboters 14 erzeugt. Weiterhin kann die in das Steuerungsprogramm des Roboters übernommene Geschwindigkeit direkt einer entsprechenden Geschwindigkeit der vorgeführten Bewegung entsprechen. Es ist jedoch zur Sicherheit einer Bedienperson möglich, die Geschwindigkeit des Roboters während des Programmiervorgangs auf vorgegebene, erlaubte Werte zu beschränken. Eine endgültige Bahngeschwindigkeit und die zugeordneten Beschleunigungen können ebenso wie weitere Randbedingungen auch durch einen nachgelagerten Programmierprozess, z.B. entsprechende Eingaben an einem herkömmlichen Bediengerät, angepasst werden.

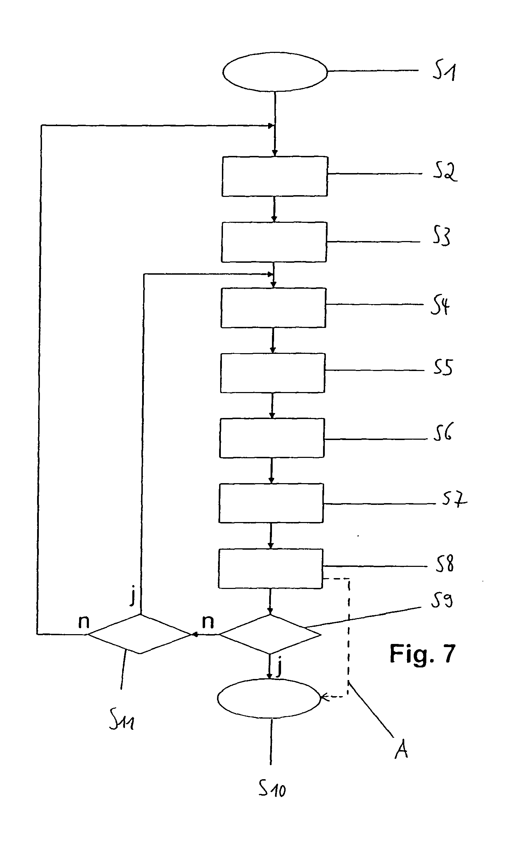

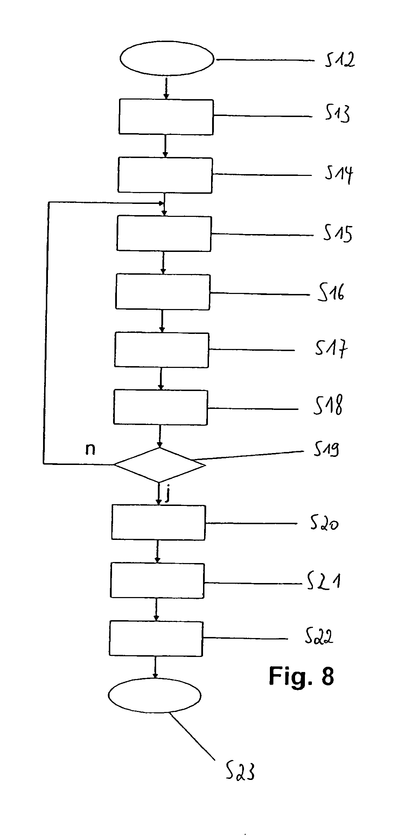

Die vorstehend detailliert beschriebene relative Bewegungsvorgabe mittels der erfindungsgemäßen Vorrichtung 1 kann optional auf beliebige Weise eingeschränkt werden, beispielsweise durch Beschränken auf eine bestimmte Anzahl von Freiheitsgraden der Bewegung, beliebige Kombinationen rotatorischer und translatorischer Freiheitsgrade oder in Bezug auf frei wählbare und/oder mit der Vorrichtung 1 teachbare Koordinatensysteme. Das erfindungsgemäße Verfahren für den Ablauf einer Bewegungsvorgabe und einer Koordinatensystem-vorgabe ist nachfolgend anhand der Fig. 7 bzw. 8 jeweils in Form eines Ablaufdiagramms nochmals detailliert dargestellt.

Erfindungsgemäß beginnt eine Bewegungsvorgabe gemäß der Fig. 7 mit Schritt S1. Die erfindungsgemäße Vorrichtung 1 (vergleiche Fig. 1-6c) wird in Schritt S2 beliebig im Raum gehalten, typischerweise in der Nähe des TCP, da dann insbesondere die Vorstellung des Verfahrvorgangs für eine Bedienperson einfacher ist. Auf einen Starthinweis der Bedienperson in Schritt S3 werden die gegenwärtige Stellung der Vorrichtung und die Pose des Roboters in Beziehung gesetzt, d.h. ihre relative Stellung zueinander wird ermittelt. Der Starthinweis kann manuell erfolgen, z.B. durch Drücken einer Taste, durch Spracheingabe oder durch eine bestimmte Bewegung der Vorrichtung (Gestenerkennung). Zusätzlich oder alternativ kann der Starthinweis auch automatisch ermittelt werden, z.B. durch Näherungssensoren am Roboter oder der Vorrichtung oder durch intelligente Bewegungserkennung, die dann anspricht, wenn die Vorrichtung sich längere Zeit in Ruhe befindet und dann plötzlich in eine andere Lage bewegt wird.

Anschließend bewegt die Bedienperson in Schritt S4 die erfindungsgemäße Vorrichtung im Raum, wobei der zurückgelegte Weg bzw. die auf diesem Weg eingenommenen Posen aufgezeichnet werden kann/können (Schritt S5). Auf einen dem Starthinweis entsprechenden Stophinweis in Schritt S6 wird die Bahnaufzeichnung beendet bzw. die Endpose der Vorrichtung bestimmt. Wenn die Bedienperson nun in Schritt S7 die Bewegungsfreigabe erteilt, kann der Roboter parallel zur aufgezeichneten Bahn im Raum verfahren werden oder aber selbsttätig die gewünschte relative Fahrbewegung berechnen und durchführen (Schritt S8), wobei ggf. noch ein Offline-Planungssystem zur Kollisionsvermeidung zum Einsatz kommt. Die Bedienperson kann die Bewegungsfreigabe jederzeit entziehen und/oder eine gerade durchgeführte Bewegung abbrechen; dies ist in Fig. 7 durch die gestrichelte Linie A dargestellt. Anschließend erfolgt in Schritt S9 die Abfrage, ob der Roboter die gewünschte Pose eingenommen hat. Wird diese Abfrage bejaht (j), so endet der Ablauf in Schritt S10, und die Endpose wird ggf. in ein Roboter-Steuerungsprogramm übernommen. Wenn nicht (n), wird der Ablauf so lange wiederholt, bis der Roboter die gewünschte Pose eingenommen hat. Hierzu erfolgt in Schritt S11 zunächst eine Abfrage dahingehend, ob die vorstehend beschriebenen Verfahrensschritte S2, S3 entfallen können. Wird die Abfrage S11 bejaht (j), so wird der Verfahrensablauf mit Schritt S4 fortgesetzt. Anderenfalls (n) wird mit Schritt S2 fortgefahren. Die Schritte S2, S3 können insbesondere dann entfallen, wenn
- der zuletzt erreichte Endpunkt mit einer ausreichenden Genauigkeit erreicht wurde;
- die Genauigkeit an diesem Bahnpunkt noch keine Rolle spielt; oder
- die Bedienperson durch bewusstes oder unbewusstes "schiefes" Positionieren der erfindungsgemäßen Vorrichtung die akkumulierten Fehler der dort enthaltenen Sensorik (Fig. 1-3) selbsttätig kompensiert.

In diesen Fällen gilt der zuletzt erreichte Endpunkt als Startpunkt für die neue (Teil-)Bewegung. Bewertungen hinsichtlich der Bewegungsgenauigkeit können im Ermessen der Bedienperson liegen, werden jedoch vorzugsweise durch die erfindungsgemäße Vorrichtung zumindest mit überwacht.

Die Fig. 8 zeigt anhand eines Ablaufdiagramms beispielhaft die Vorgabe eines Koordinatensystems mit Hilfe der erfindungsgemäßen Vorrichtung. Nach Start des Verfahrens in Schritt S12 wird die erfindungsgemäße Vorrichtung zunächst in Schritt S13 an einem Referenz-Koordinatensystem ausgerichtet, z.B. durch orientiertes Aufsetzen der Vorrichtung am Flansch des Roboters oder an einer anderen in Bezug auf den Roboter vermessenen Einrichtung. Auf einen Starthinweis der Bedienperson in Schritt S14 (vergleiche Beschreibung der Fig. 7) werden die gegenwärtigen Posen der Vorrichtung und des Roboters in Beziehung gesetzt, beispielsweise durch Nullung oder Aufschalten der Werte von Position und Orientierung des TCP. Anschließend bewegt die Bedienperson die Vorrichtung im Raum (Schritt S15). Dabei kann in Schritt S16 der zurückgelegte Weg aufgezeichnet werden. In Schritt S17 wird auf einen dem Starthinweis entsprechenden Stopphinweis die Bahnaufzeichnung beendet bzw. die Endpose der erfindungsgemäßen Vorrichtung bestimmt. Aus den nunmehr bekannten Start- und Endposen der Vorrichtung in Bezug auf ein bekanntes Referenz-Koordinatensystem ermittelt der Roboter bzw. seine Steuerung im anschließenden Schritt S18 den genauen Ort der Endpose. Es schließt sich in Schritt S19 eine Abfrage dahingehend an, ob bereits eine ausreichende Anzahl an Punkten ermittelt wurde, um das gewünschte Koordinatensystem zu bestimmen. Wird diese Abfrage bejaht (j), so wird in Schritt S20 das gewünschte Koordinatensystem berechnet. Beispielsweise lässt sich das Base-Koordinatensystem eines Roboters anhand der Positionswerte von drei Punkten berechnen. Allerdings kann auch jedes beliebige andere Koordinatensystem, z.B. das TCP-Koordinatensystem bei einer Werkzeugvermessung, mit Hilfe der erfindungsgemäßen Vorrichtung bestimmt werden. Anschließend wird in Schritt S21 die Vorrichtung erneut an einem Referenz-Koordinatensystem ausgerichtet, wie bereits anhand von Schritt S14 beschrieben. Dann werden in Schritt S22 auf einen Starthinweis (siehe oben) der Bedienperson die gegenwärtigen Posen der Vorrichtung und des Roboters verglichen, um zu überprüfen, ob die Werte aus Schritt S14 noch übereinstimmen. Daraus lässt sich ein Fehler bei der Bestimmung der Lage des Koordinatensystems ermitteln und ggf. durch eine Korrekturrechnung ausgleichen. Das Verfahren endet daraufhin in Schritt S23. Wird die Abfrage in Schritt S19 jedoch verneint (n), so wird die jetzige Endpose als Startpose der nächsten Bewegung betrachtet, und das Verfahren setzt sich mit Schritt S15 fort.

Das vorstehend beschriebene Verfahren eignet sich auch zum Festlegen von Bewegungsebenen oder Achsen im Raum, innerhalb derer die Freiheitsgrade des Roboters eingeschränkt werden sollen. Beispielsweise wird zum Verfahren einer bestimmten Achse oder zum Auswählen eines Betriebsmodus bzw. Bewegungsparameters die erfindungsgemäße Vorrichtung beliebig im Raum gehalten und auf einen Starthinweis der Bedienperson hin, beispielsweise unter Verwendung von Spracherkennung, mit der Erkennung einer Geste begonnen. Ob die entsprechende Geste erkannt wurde oder nicht, lässt sich durch die bereits erwähnte LED an der Spitze der Vorrichtung (vergleiche Fig. 1; z.B. Farbwechsel grün/rot), durch Piepsen oder durch andere geeignete Interaktionselemente anzeigen; bei Sprachausgabe oder Verwendung eines Displays (vergleiche Bezugszeichen 8 in Fig. 1) lässt sich mit Hilfe der erfindungsgemäßen Vorrichtung auch direkt ausgeben, welche Geste erkannt und welcher Betriebsmodus eingestellt wurde. Die erfindungsgemäße Vorrichtung kann auch dahingehend ausgebildet sein, dass sie die Bedienperson durch die Interaktion führt. So ist es beispielsweise möglich, dass die Bedienperson eine Achse des Roboters auswählt, indem sie die Nummer dieser Achse (als Ziffer) in die Luft schreibt oder auf die zu verfahrene Achse zeigt. Insbesondere wenn die Vorrichtung zum Auswählen einer bestimmten Roboterachse durch Zeigen ausgebildet ist, ist eine Sprach-oder Zahlenausgabe auf einem Display vorteilhaft, um der Bedienperson kontinuierliches Feedback dahingehend zu geben, auf welche Achse sie gerade zeigt, bevor eine Achsenauswahl, beispielsweise per Tastendruck, erfolgt.

Nach erfolgreicher Auswahl erfolgt ein Abgleich der gegenwärtigen Orientierung der erfindungsgemäßen Vorrichtung im Raum, beispielsweise auf Starthinweis durch die Bedienperson (siehe oben). Im Folgenden dient die Vorrichtung als eine Art Hebel, durch dessen Verdrehen im Raum die ausgewählte Achse in Bewegung gesetzt wird. Dabei könnte eine Bewegung nach "vorne" (von der Bedienperson weg) ein Verdrehen der Achse im positiven Drehsinn bedeuten, während eine Bewegung nach "hinten" ein Verdrehen im negativen Drehsinn angibt. Die Winkelabweichung der Vorrichtung von ihrer Ausgangslage lässt sich dabei als Positionsvorgabe - wie oben beschrieben auch aus mehreren Teilbewegungen zusammensetzbar und skalierbar - aber auch als Geschwindigkeitsvorgabe deuten.

Darüber hinaus kann in der Recheneinheit 6 der erfindungsgemäßen Vorrichtung 1 (Fig. 1) bzw. in der Robotersteuerung 13 (Fig. 2) optional eine intelligente Signalverarbeitung für das Erkennen von Gesten oder für die Unterscheidung von auszuführenden Bewegungen und Rückstell- oder anderen unerwünschten Bewegungen sorgen. Dies ist insbesondere zweckmäßig
- für das Zusammensetzen von Teilbahnen während der Feinpositionierung/-Orientierung;
- zum automatischen Erkennen von Rückstellbewegungen der Bedienperson während der Feinpositionierung, wodurch die Bewegungsfreigabe vereinfacht werden kann (kein weiterer Tastendruck erforderlich); und
- zur Absicherung der Bedienperson im Falle "unsinniger" Bewegungen, beispielsweise in Folge eines Stolperns der Bedienperson.

Wenn die Interaktion mit der erfindungsgemäßen Vorrichtung bzw. dem Roboter über eine Gestenerkennung erfolgt, wie vorstehend beschrieben, lässt sich die erfindungsgemäße Vorrichtung baulich besonders klein halten. Gestenerkennung ist insbesondere sinnvoll
- zur Auswahl bekannter Betriebsmodi des Roboters (Test, Automatik, Kalibrierung/Teachen von Koordinatensystemen, achsweises Verfahren, ...) oder der erfindungsgemäßen Vorrichtung (Grobpositionierung, Feinpositionierung, ...);
- zur Auswahl von Bezugskoordinatensystemen (Welt, Basis, Werkzeug, ...);
- Zur Beschränkung der Bewegungsausführung auf bestimmte Achsen und Ebenen (Achse 1, XY-Ebene, YZ-Ebene, beliebig im Raum liegende Achse oder Ebene, ...);
- zur Auswahl einzelner Achsen des Mehrachs-Roboters mittels einer Schrifterkennung, z.B. durch Schreiben der entsprechenden Zahlen in der Luft; und
- zur Vorgabe von Programmparametern/Bewegungsbefehlen, wie lineare, zirkulare oder schnellstmögliche Bewegung, zur Vorgabe von Geschwindigkeiten, Beschleunigungen, Überschleifbedingungen usw.

Zur automatischen Kalibrierung der erfindungsgemäßen Vorrichtung wird diese vorzugsweise an einem Referenz-Koordinatensystem ausgerichtet, z.B. durch orientiertes Aufsetzen der Vorrichtung am Flansch des in der Folge zu programmierenden Roboters (vergleiche Schritt S13 in Fig. 8). Auf einen Starthinweis der Bedienperson hin oder gegebenenfalls automatisch werden die gegenwärtigen Posen der Vorrichtung und des Roboters in Beziehung gesetzt (vergleiche Schritt S14 in Fig. 8). Anschließend bewegt sich der Roboter mitsamt der Vorrichtung gemäß eines bestimmten Kalibrier-Programms im Raum, so dass kontinuierlich oder an diskreten Raumpunkten aus der abgefahrenen Bahn Informationen über die Beziehung der von der Vorrichtung gelieferten Messwerte und den bekannten Roboterposen gewonnen werden können. Anhand dieser Beziehung wird die beispielsweise in der Rechnereinheit 6 der Vorrichtung angewandte Berechnungsvorschrift zum Ermitteln von Koordinaten über Skalierungsfaktoren und Parametern, beispielsweise zur Driftkompensation, derart angepasst, dass die Vorrichtung korrekte Bahninformationen liefert. Das vorstehend skizzierte Verfahren kann auch verwendet werden, um einen bestimmten Skalierungsfaktor ungleich dem Wert 1 einzustellen. Bei Verwendung des skizzierten Verfahrens mit einem Roboter, der eine entsprechende Halterung zum Aufnehmen mehrerer erfindungsgemäßer Vorrichtungen trägt, lässt sich bei bekannten Offset jeder Vorrichtung zum Referenzpunkt der Halterung die Kalibrierung an allen diesen Vorrichtungen gleichzeitig durchführen.

### Bezugszeichenliste

- 1: (Beeinflussungs-)Vorrichtung
- 2: Spitze
- 3: Messeinrichtung
- 4: Schaft
- 5: Sensormodul
- 5': externer Sensor
- 5.1, 5.2, 5.3: Beschleunigungssensor
- 5.4, 5.5, 5.6: Drehraten-Sensor
- 5.7: Temperatursensor, Magnetfeldsensor
- 6: Recheneinheit
- 7: Übertragungseinrichtung
- 8: Anzeigeeinrichtung
- 8': Mikrophon
- 8": Lautsprecher
- 9: Jog-Rad
- 10, 10': Taste
- 11: Leuchtdiode
- 12: Spannungsquelle
- 13: Roboter-Steuerung
- 13.1: Übertragungseinrichtung
- 14: Roboter
- 14.1: Roboterwerkzeug
- α, α', α": Winkel
- A: Abbruch
- B, B', B": Bewegungsbahn
- j: bejahte Abfrage
- n: verneinte Abfrage
- P: Referenzpunkt
- P₁: Startpose
- P₂, P₃: Zwischenpose
- P₄: Zielpose
- S1-S23: Verfahrensschritte
- T, T', T": Translationsbewegung
- V₁, V₂: Verbindung
- X, Y, Z: Raumrichtung

## Patentansprüche

1. Verfahren zum Beeinflussen eines mehrachsigen Handhabungsgeräts, wie eines Mehrachs-Industrieroboters, mit einer handgeführten Beeinflussungs-Vorrichtung (1), deren Stellung beinhaltend eine Position und Lage im Raum gemessen und zum Beeinflussen des Handhabungsgeräts verwendet wird, **dadurch gekennzeichnet, dass** im Wechsel Bewegungen der Beeinflussungs-Vorrichtung und zugeordnete Bewegungen des Handhabungsgeräts durchgeführt werden.

2. Verfahren nach Anspruch 1, **dadurch gekennzeichnet, dass** die Stellung der Beeinflussungs-Vorrichtung durch eine innerhalb dieser angeordnete, interne Sensorik (5) gemessen wird.

3. Verfahren nach Anspruch 1, **dadurch gekennzeichnet, dass** die Stellung der Beeinflussungs-Vorrichtung durch eine außerhalb dieser angeordnete, externe Sensorik gemessen wird.

4. Verfahren nach Anspruch 2 oder 3, **dadurch gekennzeichnet, dass** eine Messungenauigkeit der zur Stellungsmessung eingesetzten Sensorik kontinuierlich überwacht wird.

5. Verfahren nach einem der Ansprüche 2 bis 4, **dadurch gekennzeichnet, dass** eine zeitliche Abfolge des Wechsels zwischen Bewegungen der Beeinflussungs-Vorrichtung des Handhabungsgeräts durch die Messungenauigkeit der eingesetzten Sensorik vorgegeben wird.

6. Verfahren nach Anspruch 4 oder 5, **dadurch gekennzeichnet, dass** bei Erreichen eines vorgegebenen Werts für die Messungenauigkeit eine erforderliche Kalibrierung der eingesetzten Sensorik angezeigt und optional ein Beeinflussen des Handhabungsgeräts durch die Beeinflussungs-Vorrichtung verhindert wird.

7. Verfahren nach einem der Ansprüche 1 bis 6, **dadurch gekennzeichnet, dass** der Wechsel von einer Bewegung der Beeinflussungs-Vorrichtung zu einer Bewegung des Handhabungsgeräts nach Betätigen einer Zustimmungseinrichtung erfolgt.

8. Verfahren nach einem der Ansprüche 1 bis 7, **dadurch gekennzeichnet, dass** gleichzeitig Stellungen oder Stellungsänderungen in allen bewegungsrelevanten Freiheitsgraden des Handhabungsgeräts erfasst werden.

9. Verfahren nach Anspruch 8, **dadurch gekennzeichnet, dass** lediglich eine Anfangs- und eine Endstellung erfasst werden.

10. Verfahren nach Anspruch 8 oder 9, **dadurch gekennzeichnet, dass** die zugeordnete Bewegung des Handhabungsgeräts entlang einer vorbestimmten Art von Bahn zwischen den der Anfangs- und der Endstellung der Beeinflussungs-Vorrichtung jeweils zugeordneten Stellungen des Handhabungsgeräts erfolgt.

11. Verfahren nach Anspruch 8, **dadurch gekennzeichnet, dass** während der Bewegung der Beeinflussungs-Vorrichtung kontinuierlich Stellungen derselben erfasst werden.

12. Verfahren nach Anspruch 11, **dadurch gekennzeichnet, dass** die zugeordnete Bewegung des Handhabungsgeräts entlang einer nach Maßgabe der erfassten Stellungen bestimmten, im wesentlichen beliebig gestalteten Bahn erfolgt.

13. Verfahren nach einem der vorangehenden Ansprüche, **dadurch gekennzeichnet, dass** zusätzlich weitere einer Stellung des Handhabungsgeräts zugeordnete Parameter, wie eine Einwirkkraft auf ein zu bearbeitendes Werkstück, durch die Beeinflussungs-Vorrichtung bestimmt werden.

14. Verfahren nach einem der vorangehenden Ansprüche, **dadurch gekennzeichnet, dass** die gemessenen Stellungen und/oder weiteren Parameter der Beeinflussungs-Vorrichtung, wie ein Bewegungsverlauf einschließlich Geschwindigkeiten und Beschleunigungen, zum Erstellen eines Programms zur Bewegungssteuerung des Handhabungsgeräts und/oder zum direkten Bedienen desselben verwendet werden.

15. Verfahren nach einem der vorangehenden Ansprüche, **dadurch gekennzeichnet, dass** die Beeinflussungs-Vorrichtung auf das zu beeinflussende Handhabungsgerät kalibriert wird, indem sie mit diesem verbunden wird, das Handhabungsgerät anschließend eine vorbestimmte Abfolge von Raumpunkten anfährt und dann Stellungsmesswerte der Beeinflussungs-Vorrichtung zu bekannten Stellungswerten des Handhabungsgeräts in Beziehung gesetzt werden.

16. Verfahren nach einem der Ansprüche 1 bis 15, **dadurch gekennzeichnet, dass** zum gezielten Beeinflussen des Handhabungsgeräts, wie einer Auswahl zu verfahrender Achsen und/oder eines Betriebsmodus, bestimmte mit der Beeinflussungs-Vorrichtung beschriebene Gesten erkannt und entsprechend zum Beeinflussen des Handhabungsgeräts umgesetzt werden.

17. Verfahren nach einem der Ansprüche 1 bis 16, **dadurch gekennzeichnet, dass** mittels der Beeinflussungs-Vorrichtung eine Skalierung der Bewegung des Handhabungsgeräts in Raum und/oder Zeit erfolgt.

18. Verfahren nach einem der Ansprüche 1 bis 17, **dadurch gekennzeichnet, dass** eine Beeinflussung des Handhabungsgeräts mittels der Beeinflussungs-Vorrichtung auf eine bestimmte Anzahl von Freiheitsgraden beschränkt erfolgt.

19. Handgeführte Vorrichtung (1) zum Beeinflussen einer Bewegung eines mehrachsigen Handhabungsgeräts, wie eines Mehrachs-Industrieroboters, deren Stellung beinhaltend eine Lage und Position im Raum mittels einer Sensorik bestimmbar ist, **gekennzeichnet durch** eine Kontrolleinrichtung (6) zum Überwachen einer Messungenauigkeit der Stellungsbestimmungs-Sensorik (5).

20. Vorrichtung nach Anspruch 19, **dadurch gekennzeichnet, dass** die Sensorik (5) in der Vorrichtung (1) enthalten ist.

21. Vorrichtung nach Anspruch 19 oder 20, **dadurch gekennzeichnet, dass** die Sensorik (5) eine Inertial-Sensorik aufweist.

22. Vorrichtung nach Anspruch 19, **dadurch gekennzeichnet, dass** die Sensorik außerhalb der Vorrichtung (1) angeordnet ist.

23. Vorrichtung nach Anspruch 22, **dadurch gekennzeichnet, dass** zum Erfassen von Bewegungen der Vorrichtung (1) externe, außerhalb der Vorrichtung (1) angeordnete Sensoren (5') vorgesehen und mit einer Steuereinheit (13) des Handhabungsgeräts (14) und/oder einer Recheneinheit (6) der Vorrichtung (1) verbunden sind.

24. Vorrichtung nach einem der Ansprüche 19 bis 23, **dadurch gekennzeichnet, dass** bei Überschreiten vorbestimmter Parameterwerte für die Messungenauigkeit nach Maßgabe der Kontrolleinrichtung (6) keine Beeinflussung des Handhabungsgeräts (14) mittels der Vorrichtung (1) möglich ist.

25. Vorrichtung nach einem der Ansprüche 19 bis 24, **gekennzeichnet durch** eine Kalibriereinrichtung (6) zum Reduzieren der Messungenauigkeit.

26. Vorrichtung nach einem der Ansprüche 19 bis 25, **dadurch gekennzeichnet, dass** die Sensorik (5, 5') zum gleichzeitigen Bestimmen von Stellungen in allen Freiheitsgraden der Bewegung des Handhabungsgeräts (14) ausgebildet ist.

27. Vorrichtung nach einem der Ansprüche 19 bis 26, **gekennzeichnet durch** mindestens eine geometrisch ausgezeichnete Vorzugsrichtung, wie eine Spitze (2) oder dergleichen.

28. Vorrichtung nach einem der Ansprüche 19 bis 27, **gekennzeichnet durch** eine Messeinrichtung (3) zum Bestimmen beim Berühren eines Objekts auf die Vorrichtung (1) einwirkender Kontaktkräfte oder Momente.

29. Vorrichtung nach einem der Ansprüche 19 bis 28, **dadurch gekennzeichnet, dass** Messdaten der Vorrichtung (1) zur zeitgleichen Bewegungsführung des Handhabungsgeräts (14) verwendbar sind.

30. Vorrichtung nach einem der Ansprüche 19 bis 29, **dadurch gekennzeichnet, dass** Messdaten der Vorrichtung (1) zum Erstellen von Bewegungsprogrammen für das Handhabungsgerät (14) verwendbar sind.

31. Vorrichtung nach Anspruch 29 oder 30, **gekennzeichnet durch** Bedien- und Anzeigeeinrichtungen (8, 8', 8'', 9, 10, 10') zum Auswählen und Überwachen der verschiedenen Betriebsmodi.

32. Vorrichtung nach einem der Ansprüche 19 bis 31, **gekennzeichnet durch** eine Recheneinheit (6) zum Verarbeiten von Messdaten in Steuerungsdaten für das Handhabungsgerät (14).

33. Vorrichtung nach einem der Ansprüche 19 bis 32, **gekennzeichnet durch** eine Übertragungseinrichtung (7) zum Übertragen von Daten an das Handhabungsgerät (13, 14).

34. Vorrichtung nach Anspruch 33, **dadurch gekennzeichnet, dass** die Übertragungseinrichtung (7) für eine drahtlose Übertragung eingerichtet ist.

35. Vorrichtung nach einem der Ansprüche 19 bis 34, **gekennzeichnet durch** Mittel (8') zur Spracherkennung und/oder Mittel (8, 8") zum Führen einer Bedienperson, insbesondere zum interaktiven Führen **durch** akustische und/oder optische Signale.

## Claims

1. Method for influencing a multiaxial manipulator, such as a multiaxial industrial robot, with a manually guided influencing device (1), whose position comprising a position and location in space is measured and used for influencing the manipulator, wherein in alternating manner movements of the influencing device and associated movements of the manipulator are performed.

2. Method according to claim 1, wherein the position of the influencing device is measured by means of an internal sensor (5) means located within the same.

3. Method according to claim 1, wherein the position of the influencing device is measured by external sensor means located outside the same.

4. Method according to claim 2 or 3, wherein an inaccuracy of measurement of the sensor means used for position measurement purposes is continuously monitored.

5. Method according to one of the claims 2 to 4, wherein a time sequence of the alternation between movements of the influencing device of the manipulator is preset by the measurement inaccuracy of the sensor means used.

6. Method according to one of the claims 4 or 5, wherein on reaching a preset value for the measurement inaccuracy a necessary calibration of the sensor means used is indicated and optionally an influencing of the manipulator by the influencing device is prevented.

7. Method according to one of the claims 1 to 6, wherein the alternation of a movement of the influencing device and a movement of the manipulator takes place after operating an approval device.

8. Method according to one of the claims 1 to 7, wherein simultaneously positions or position changes in all movement-relevant degrees of freedom of the manipulator are detected.

9. Method according to claim 8, wherein only a starting and an end position are detected.

10. Method according to claim 8 or 9, wherein the associated movement of the manipulator along a predetermined type of path takes place between the manipulator positions associated with the starting and end positions of the influencing device.

11. Method according to claim 8, wherein during the movement of the influencing device positions thereof are continuously detected.

12. Method according to claim 11, wherein the associated manipulator movement takes place along a substantially randomly designed path determined in accordance with the detected positions.

13. Method according to one of the preceding claims, wherein additionally further parameters associated with a manipulator position, such as an action force on a workpiece to be machined are determined by the influencing device.

14. Method according to one of the preceding claims, wherein the measured positions and/or further parameters of the influencing device, such as a movement path including speeds and accelerations, are used for producing a program for the movement control of the manipulator and/or for the direct operation thereof.

15. Method according to one of the preceding claims, wherein the influencing device is calibrated with respect to the handling device to be influenced by connection thereto, the manipulator then moves up to a predetermined sequence of spatial points and then position measured values of the influencing device are related to known position values of the manipulator.

16. Method according to one of the claims 1 to 15, wherein for the planned influencing of the manipulator, such as a selection of axes to be travelled and/or an operating mode, specific gestures described with the influencing device are recognized and correspondingly transformed for influencing the manipulator.

17. Method according to one of the claims 1 to 16, wherein there is a scaling of the manipulator movement in space and/or time by means of the influencing device.

18. Method according to one of the claims 1 to 17, wherein an influencing of the manipulator by means of the influencing device is limited to a specific number of degrees of freedom.

19. Hand-guided device (1) for influencing a movement of a multiaxial manipulator, such as a multiaxial industrial robot, whose position incorporates a position and location in space can be determined by means of sensor means, wherein a monitoring device (6) for monitoring an inaccuracy of measurement of the position determining sensor means (5).

20. Device according to claim 19, wherein the sensor means (5) is contained within the device (1).

21. Device according to claim 19 or 20, wherein the sensor means (5) has an inertial sensor means.

22. Device according to claim 19, wherein the sensor means is located outside the device (1).

23. Device according to claim 22, wherein for detecting movements of the device (1) there are sensors located outside said device (1) connected to a control unit (13) of the manipulator (14) and/or a computing unit (6) of the device (1).

24. Device according to one of the claims 19 to 23, wherein on exceeding predetermined parameter values for the measurement inaccuracy in accordance with the monitoring device (6) no influencing of the manipulator (14) by means of the device (1) is possible.

25. Device according to one of the claims 19 to 24, wherein a calibrating device (6) for reducing the measurement inaccuracy.

26. Device according to one of the claims 19 to 25, wherein the sensor means (5, 5') is constructed for the simultaneous determination of positions in all degrees of freedom of the manipulator movement.

27. Device according to one of the claims 19 to 26, having means of at least one geometrically recorded preferred direction, such as a tip (2) or the like.

28. Device according to one of the claims 19 to 27, wherein a measuring device (3) for determining contact forces or moments acting on the device (1) on contacting an object is provided.

29. Device according to one of the claims 19 to 28, wherein measured data of the device (1) are usable for same time movement control of the manipulator.

30. Device according to one of the claims 19 to 29, wherein measured data of the device (1) can be used for producing movement programs for the manipulator (14).

31. Device according to claim 29 or 30, being provided with operating and indicating devices (8, 8', 8", 9, 10, 10') for selecting and monitoring different operating modes.

32. Device according to one of the claims 19 to 31, having a computing unit (6) for processing measured data into control data for the manipulator (14).

33. Device according to one of the claims 19 to 32, wherein a transmitting device (7) for transmitting data to the manipulator (13, 14) is provided.

34. Device according to claim 33, wherein the transmitting device (7) is set up for wireless transmission.

35. Device according to one of the claims 19 to 34, wherein voice recognition means and/or operator guidance means are provided, particularly for interactive guidance by acoustic and/or optical signals.

## Revendications

1. Procédé pour influencer un manipulateur à axes multiples, tel un robot industriel à axes multiples, avec un dispositif d'influence (1) guidé à la main, dont la position, comprenant une situation et une localisation dans l'espace, est mesurée et employée pour influencer le manipulateur, **caractérisé en ce que** des mouvements du dispositif d'influence sont exercés en alternance avec les mouvements affectés du manipulateur.

2. Procédé selon la revendication 1, **caractérisé en ce que** la position du dispositif d'influence est mesurée par un système de capteurs (5) interne placé à l'intérieur dudit dispositif.

3. Procédé selon la revendication 1, **caractérisé en ce que** la position du dispositif d'influence est mesurée par un système de capteurs (5) externe placé à l'extérieur dudit dispositif.

4. Procédé selon l'une des revendications 2 ou 3, **caractérisé en ce que** la précision de la mesure du système de capteurs servant à mesurer la position est surveillée en continu.

5. Procédé selon une des revendications 2 à 4, **caractérisé en ce qu'**une séquence chronologique de l'alternance entre les mouvements du dispositif d'influence et du manipulateur est donnée comme consigne par la précision de la mesure du système de capteurs employé.

6. Procédé selon une des revendications 4 ou 5, **caractérisé en ce que**, lorsque est atteinte une valeur prédéfinie pour la précision de la mesure, un calibrage nécessaire du système de capteurs employé est signalé et, facultativement, l'influence du dispositif d'influence sur le manipulateur est réprimée.

7. Procédé selon une des revendications 1 à 6, **caractérisé en ce que** l'alternance du mouvement du dispositif d'influence au mouvement du manipulateur a lieu après actionnement d'un dispositif de validation.

8. Procédé selon une des revendications 1 à 7, **caractérisé en ce que** les positions ou les changements de position sont saisis simultanément dans tous les degrés de liberté importants pour les mouvements du manipulateur.

9. Procédé selon la revendication 8, **caractérisé en ce que** seules une position de début et une position de fin sont saisies.

10. Procédé selon une des revendications 8 ou 9, **caractérisé en ce que** le mouvement affecté du manipulateur s'effectue le long d'un type prédéfini de trajectoire entre les positions du manipulateur affectées respectivement à la position de début et à la position de fin du dispositif d'influence.

11. Procédé selon la revendication 8, **caractérisé en ce que** durant le mouvement du dispositif d'influence les positions de ce dernier sont saisies de manière continue.

12. Procédé selon la revendication 11, **caractérisé en ce que** le mouvement affecté du manipulateur a lieu le long d'une trajectoire essentiellement quelconque, déterminée en fonction des positions saisies.

13. Procédé selon une des revendications qui précèdent, **caractérisé en ce que** d'autres paramètres encore, affectés à une position du manipulateur, comme la force à appliquer sur une pièce en cours d'usinage sont définis par le dispositif d'influence.

14. Procédé selon une des revendications qui précèdent, **caractérisé en ce que** les positions mesurées et/ou les autres paramètres du dispositif d'influence, comme le déroulement d'un mouvement, y compris les vitesses et les accélérations, sont utilisés pour créer un programme commandant les mouvements du manipulateur et/ou pour commander directement ce dernier.

15. Procédé selon une des revendications qui précèdent, **caractérisé en ce que** le dispositif d'influence est calibré sur le manipulateur qu'il doit influencer en étant connecté à ce dernier, le manipulateur mettant alors en marche le déplacement vers une suite prédéfinie de points dans l'espace, des mesures de position du dispositif d'influence étant ensuite mises en relation avec les valeurs de position connues du manipulateur.

16. Procédé selon une des revendications 1 à 15, **caractérisé en ce que** pour influencer de manière sélective le manipulateur, comme la sélection des axes à déplacer et/ou d'un mode de service, certains gestes décrits avec le dispositif d'influence sont détectés et convertis en conséquence pour influencer le manipulateur.

17. Procédé selon une des revendications 1 à 16, **caractérisé en ce qu'**au moyen du dispositif d'influence a lieu un cadrage du mouvement du manipulateur dans l'espace et/ou dans le temps.

18. Procédé selon une des revendications 1 à 17, **caractérisé en ce que** l'influence du dispositif d'influence sur le manipulateur s'exerce de manière limitée à un certain nombre de degrés de liberté.

19. Dispositif guidé à la main (1) pour influencer un mouvement d'un manipulateur à axes multiples, tel un robot industriel à axes multiples, dont la position comprenant une situation et une localisation dans l'espace peut être déterminée par un système de capteurs, **caractérisé par** un dispositif de contrôle (6) pour surveiller la précision de la mesure du système de capteurs (5) commandant la position.

20. Dispositif selon la revendication 19, **caractérisé en ce que** le système de capteurs (5) est contenu dans le dispositif (1).

21. Dispositif selon une des revendications 19 ou 20, **caractérisé en ce que** le système de capteurs (5) présente un système inertiel.

22. Dispositif selon la revendication 19, **caractérisé en ce que** le système de capteurs est placé en dehors du dispositif (1).

23. Dispositif selon la revendication 22, **caractérisé en ce que**, pour saisir les mouvements du dispositif (1), sont prévus des capteurs (5) externes, placés en dehors du dispositif (1), lesdits capteurs étant connectés à une unité de commande (13) du manipulateur (14) et/ou à une unité arithmétique (6) du dispositif (1).

24. Dispositif selon une des revendications 19 à 23, **caractérisé en ce qu'**en cas de dépassement de paramètres prédéfinis pour la précision de la mesure en fonction du dispositif de contrôle (6), le dispositif (1) ne peut plus influencer le manipulateur (14).

25. Dispositif selon une des revendications 19 à 24, **caractérisé par** un dispositif de calibrage (6) pour réduire la précision de la mesure.

26. Dispositif selon une des revendications 19 à 25, **caractérisé en ce que** le système de capteurs (5, 5') est conçu pour déterminer simultanément les positions dans tous les degrés de liberté de mouvement du manipulateur (14).

27. Dispositif selon une des revendications 19 à 26, **caractérisé par** au moins une orientation géométrique préférentielle marquée, comme une pointe (2) ou autre.

28. Dispositif selon une des revendications 19 à 27, **caractérisé par** un dispositif de mesure (3) pour déterminer au contact d'un objet les forces de contact ou les couples s'exerçant sur le dispositif (1).

29. Dispositif selon une des revendications 19 à 28, **caractérisé en ce que** les données métrologiques du dispositif (1) sont utilisables pour guider dans le même temps les mouvements du manipulateur (14).

30. Dispositif selon une des revendications 19 à 29, **caractérisé en ce que** les données métrologiques du dispositif (1) sont utilisables pour créer des programmes de mouvement pour le manipulateur (14).

31. Dispositif selon une des revendications 29 ou 30, **caractérisé par** des organes de commande et d'affichage (8, 8', 8", 9, 10, 10') pour sélectionner et surveiller les différents modes de service.

32. Dispositif selon une des revendications 19 à 31, **caractérisé par** une unité arithmétique (6) pour transformer les données métrologiques en données de commande pour le manipulateur (14).

33. Dispositif selon une des revendications 19 à 32, **caractérisé par** un dispositif de transfert (7) pour transférer les données au manipulateur (13, 14).

34. Dispositif selon la revendication 33, **caractérisé en ce que** le dispositif de transfert (7) est installé pour une transmission sans fil.

35. Dispositif selon une des revendications 19 à 34, **caractérisé par** des moyens (8') de reconnaissance vocale et/ou des moyens (8, 8") pour guider un opérateur, notamment pour le guidage interactif par des signaux acoustiques et/ou optiques.
